Europäisches Patentamt

European Patent Office

Office européen des brevets

(19)

(11) Numéro de publication: **0 503 556 A1**

## (12) DEMANDE DE BREVET EUROPEEN

(21) Numéro de dépôt: **92104070.5**

(22) Date de dépôt: **10.03.92**

(51) Int. Cl.5: **G01P 13/04**, H01H 9/16

(30) Priorité: **13.03.91 FR 9103035**

(43) Date de publication de la demande:
**16.09.92 Bulletin 92/38**

(84) Etats contractants désignés:
**AT BE CH DE DK ES FR GB GR IT LI LU MC NL PT SE**

(71) Demandeur: **GEC ALSTHOM SA**
**38, avenue Kléber**
**F-75116 Paris(FR)**

(72) Inventeur: **Dupraz, Jean-Pierre**
**7, rue Moisonnier**
**F-69003 Lyon(FR)**
Inventeur: **Moncorge, Jean-Paul**
**30 Chemin de la Rize**
**F-69120 Vaux en Velin(FR)**

(74) Mandataire: **Weinmiller, Jürgen et al**
**Lennéstrasse 9 Postfach 24**
**W-8133 Feldafing(DE)**

(54) **Dispositif de mesure incrémentale du déplacement d'une pièce mobile en translation en particulier d'une bielle de commande de disjoncteur.**

(57) La présente invention concerne un dispositif de mesure de déplacement d'une pièce mobile en translation longitudinale.

Le premier élément (1) est fixé sur la bielle (3), ce premier élément (1) étant en matériau magnétique et au moins un second élément (2) est disposé de façon fixe sur la course de la bielle (3) à proximité de celle-ci, ce second élément (2) comprenant une bobine électrique (4), le passage du premier élément (1) vis-à-vis du second élément (2) induisant dans la bobine (4) une variation de tension, l'énergie électrique en résultant étant transmise à une diode électroluminescente (5) dont les impulsions lumineuses sont transmises par une fibre optique (6).

FIG.1

EP 0 503 556 A1

La présente invention se rapporte à un dispositif de mesure incrémentale à distance du déplacement d'une pièce mobile en translation, en particulier d'une bielle de commande de disjoncteur, ladite bielle étant mobile en translation longitudinale.

Grâce à l'invention, la détection du déplacement d'une bielle de commande de disjoncteur ou d'une pièce mobile inaccessible car éloignée ou sous tension peut se faire de façon simple et fiable, et ceci à partir d'un poste de surveillance distant du poste électrique en soi.

Pour ce faire, un premier élément est fixé sur la bielle, ce premier élément étant en matériau magnétique et au moins un second élément est disposé de façon fixe sur la course de la bielle, à proximité de celle-ci, ce second élément comprenant une bobine électrique, le passage du premier élément en vis-à-vis du second élément induisant dans la bobine une variation de tension, l'énergie électrique en résultant étant transmise à une diode électroluminiscente dont les impulsions lumineuses sont transmises par une fibre optique.

Selon une première variante de réalisation le premier élément est un aimant et le second élément une bobine entourant la bielle.

Dans ce cas de préférence, l'aimant est constitué d'un manchon fixé sur la bielle.

Selon une seconde variante de réalisation le premier élément est un manchon de matière magnétique, et le second élément est constitué de deux armatures en matière magnétique enserrant une bobine et un aimant et disposées radialement par rapport à la bielle.

Afin de permettre une mesure continue du déplacement, le manchon est de longueur sensiblement égal à la course de la bielle et comporte une indentation régulière annulaire.

Dans ce cas, de préférence les armatures sont de même épaisseur que les parties saillantes de l'indentation et écartées d'une distance égale à l'écartement de ces dernières.

Afin de permettre une détermination du sens de déplacement, sont prévus deux seconds éléments espacés d'une distance égale à un multiple de l'épaisseur des parties saillantes de l'indentation augmenté de la moitié de cette épaisseur qui est égale à l'écartement entre ces parties saillantes.

Selon un agencement particulier et préféré, les deux armatures sont annulaires, enserrent un aimant annulaire et une bobine, ces trois éléments entourant la bielle.

Afin d'obtenir une symétrie de fonctionnement dans les deux sens de déplacement, un pont de diodes peut être inséré entre la bobine et la diode électroluminiscente.

L'invention est exposée ci-après plus en détail à l'aide de dessins représentant seulement des modes de réalisation de l'invention.

La figure 1 représente un premier mode de réalisation de l'invention, les éléments étant représentés en coupe selon un plan de symétrie longitudinal de la bielle et le circuit électrique étant schématisé.

La figure 2 représente une vue analogue d'un second mode de réalisation de l'invention.

La figure 3 est une vue analogue à la figure 2 représentant une variante de réalisation de l'élément de mesure fixe.

La figure 4 représente un mode de réalisation de l'invention permettant la détermination du sens de déplacement.

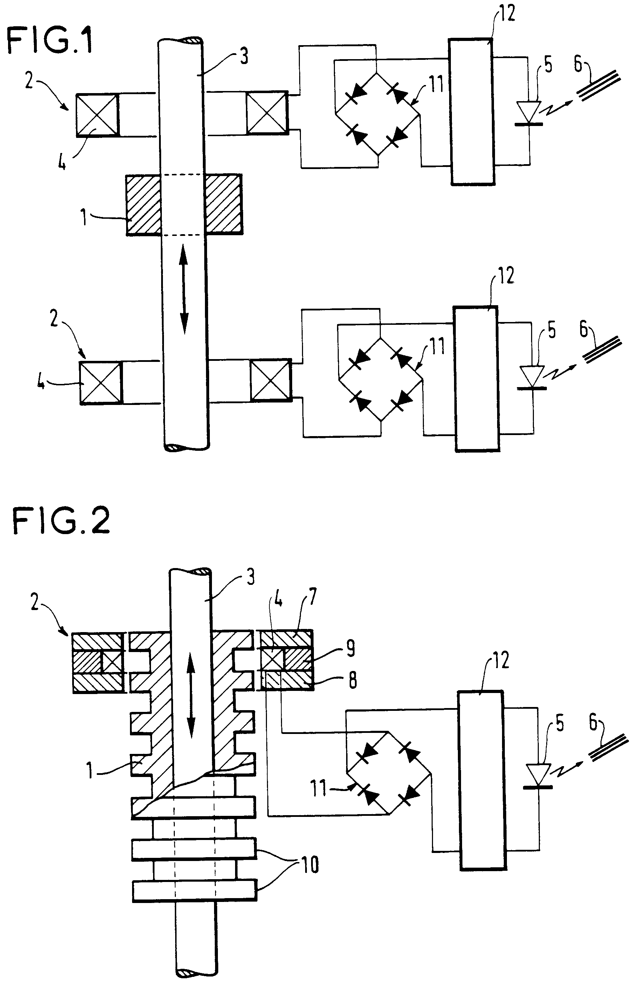

Le dispositif représenté sur la figure 1 permet de détecter le déplacement d'une bielle 3, de préférence de commande de disjoncteur, d'un point haut d'enclenchement à un point bas de déclenchement et inversement.

Un premier élément 1 constitué d'un aimant en forme de manchon est fixé sur la bielle 3. Sur la course de la bielle 3, chacune à proximité des extrémités de celle-ci, sont disposées deux bobines électriques 4, la bielle 3 traversant ces bobines 4.

Lorsque l'aimant 1 traverse l'une ou l'autre des bobines 4, est engendrée une variation de flux à l'intérieur de la bobine 4. Cette variation de flux induit une tension dans la bobine libérant une énergie électrique mise à profit pour alimenter une diode électroluminiscente 5 par l'intermédiaire d'un limiteur de tension et de courant 12. Cette diode 5 émet donc une impulsion lumineuse à chaque passage de l'aimant 1 dans l'une des bobines 4. Cette impulsion lumineuse émise est transmise à un poste de surveillance par une fibre optique 6.

Afin d'obtenir une symétrie de fonctionnement, quel que soit le sens de passage de l'aimant 1, un pont de diodes 11 peut être inséré entre bobine 4 et diode électroluminiscente 5.

Plus de deux bobines 4 peuvent être disposées sur la trajectoire de la bielle 3.

Ainsi la mesure du déplacement peut être affinée à des emplacements précis choisis.

Les figures 2 à 4 représentent un autre mode de réalisation de l'invention, permettant une mesure incrémentale plus affinée du déplacement.

La bielle 3 est équipée d'un manchon 1 de longueur sensiblement égal à sa course et en matériau magnétique. Ce manchon 1 comporte une indentation 10 de forme annulaire et régulière, les parties saillantes ayant une épaisseur égale les unes des autres et égale à leur écartement respectif.

Selon la figure 2, le second élément 2 fixe est constitué d'une pièce annulaire traversée par la bielle 3. Cette pièce annulaire est constituée de deux armatures annulaires 7 et 8 en matériau magnétique doux insérant en sandwich un aimant annulaire 9 et une bobine 4. Cette bobine 4 est reliée comme dans le cas précédent à une diode électroluminiscente 5 par l'intermédiaire d'un pont de diodes 11 et d'un limiteur 12. Les armatures 7 et 8 ont une épaisseur égale à celle des parties saillantes de l'indentation et sont espacées du même écartement.

Lorsque des "dents" du manchon 1 coïncident avec les armatures 7 et 8 (comme il est représenté sur la figure 2) le flux magnétique est maximal.

Par contre lorsque les armatures 7 et 8 sont en face de parties en creux, le flux magnétique est minimal.

Lors du déplacement de la bielle 3, les variations de flux magnétique induisent des tensions dans la bobine 4 du second élément 2. Il en résulte des impulsions de tension, une par "dent" du manchon 1, qui sont utilisées pour exciter la diode électroluminiscente 5. Les impulsions de lumière en résultant sont transmises à distance par une fibre optique 6.

Par comptage du nombre d'impulsions, il est ainsi possible de déterminer la position et la vitesse de déplacement de la bielle 3.

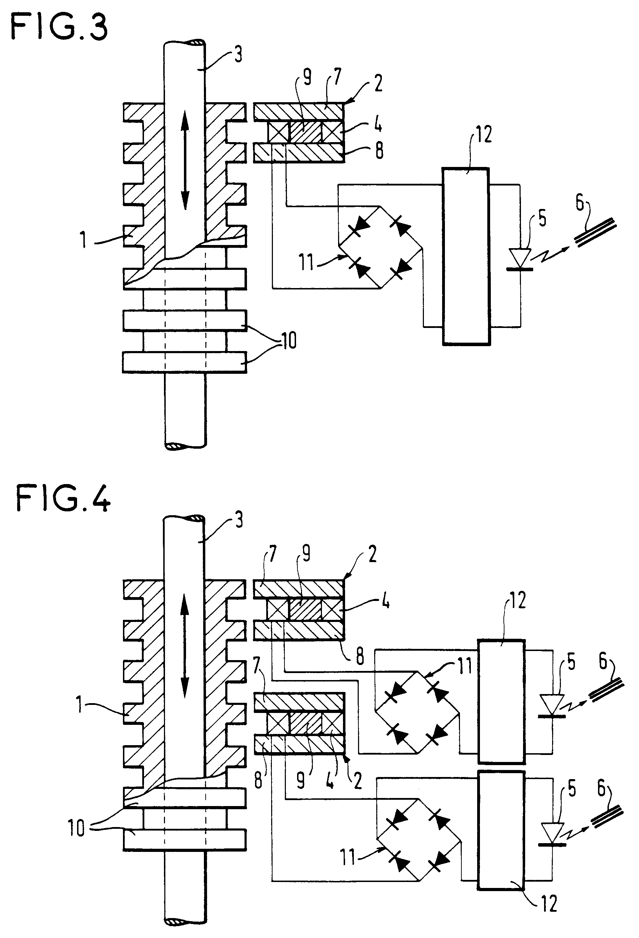

Selon la figure 3, le second élément 2 fixe n'est pas annulaire et est disposé à proximité du manchon 1 de la bielle 3. Il est constitué de deux armatures 7 et 8 d'épaisseur égale à l'épaisseur des "dents" du manchon 1 et espacées du même écartement que celles-ci. Elles enserrent un aimant 9 autour duquel est enroulée une bobine 4 reliée, comme précédemment, à une diode électroluminiscente 5 par l'intermédiaire d'un pont de diodes 11 et d'un limiteur 12.

Le fonctionnement de ce dispositif est identique à celui du dispositif représenté sur la figure 2.

Les agencements précédemment décrits ne permettent pas de déterminer le sens de déplacement de la bielle 3.

Le dispositif selon la figure 4, permet de déterminer en plus le sens de déplacement.

Deux seconds éléments 2 du type annulaire comme décrit en correspondance à la figure 2 ou du type décrit en correspondance à la figure 3, sont disposés en vis-à-vis du manchon à indentation 1.

Les éléments 2 sont décalés d'une demi "dent" l'un par rapport à l'autre. Plus précisément, la distance entre eux est un multiple de l'épaisseur des "dents" augmenté de la moitié de cette épaisseur.

Comme précédemment, chaque bobine 4 est reliée à une diode électroluminiscente 5 par l'intermédiaire d'un pont de diodes 11 et d'un limiteur 12, les impulsions lumineuses étant transmises par une fibre optique 6.

Ce dispositif permet de déterminer le sens de déplacement par comparaison des impulsions transmises et mesure de leur période. En effet, si la bielle 3 est déplacée vers le haut (en considérant la bielle 3 vue selon les figures), le maximum de tension au deuxième élément 2 suivra le maximum de tension au premier élément 2 pour un déplacement d'une demi "dent". Par contre, si la bielle 3 est déplacée vers le bas, le maximum de tension au deuxième élément 2 suivra celui au premier élément 2 pour un déplacement d'une "dent" et demi.

## Revendications

1. Dispositif de mesure incrémentale à distance du déplacement d'une pièce mobile en translation en particulier d'une bielle de commande de disjoncteur, ladite bielle étant mobile en translation longitudinale, caractérisé en ce qu'un premier élément (1) est fixé sur la bielle (3), ce premier élément (1) étant en matériau magnétique et en ce qu'au moins un second élément (2) est disposé de façon fixe sur la course de la bielle (3), à proximité de celle-ci, ce second élément (2) comprenant une bobine électrique (4), le passage du premier élément (1) en vis-à-vis du second élément (2) induisant dans la bobine (4) une variation de tension, l'énergie électrique en résultant étant transmise à une diode électroluminiscente (5) dont les impulsions lumineuses sont transmises par une fibre optique (6),

2. Dispositif selon la revendication 1, caractérisé en ce que le premier élément (1) est un aimant et le second élément (2) une bobine (4) entourant la bielle (3).

3. Dispositif selon la revendication 2, caractérisé en ce que l'aimant (1) est constitué d'un manchon fixé sur la bielle (3).

4. Dispositif selon la revendication 1, caractérisé en ce que le premier élément (1) est un manchon de matière magnétique, et en ce que le second élément (2) est constitué de deux armatures (7, 8) en matière magnétique enserrant une bobine (4) et un aimant (9) et disposées radialement par rapport à la bielle (3).

5. Dispositif selon la revendication 4, caractérisé en ce que le manchon (1) est de longueur sensiblement égal à la course de la bielle (3) et comporte une indentation régulière annulaire (10).

6. Dispositif selon la revendication 5, caractérisé en ce que les armatures (7, 8) sont de même épaisseur que les parties saillantes de l'indentation (10) et écartées d'une distance égale à l'écartement de ces dernières.

7. Dispositif selon la revendication 4, 5 ou 6 caractérisé en ce que sont prévus deux seconds éléments (2) espacés d'une distance égale à un multiple de l'épaisseur des parties saillantes de l'indentation augmenté de la moitié de cette épaisseur qui est égale à l'écartement entre ces parties saillantes.

8. Dispositif selon l'une quelconque des revendications 4 à 7, caractérisé en ce que les deux armatures (7, 8) sont annulaires et enserrent un aimant (9) annulaire et une bobine (4), ces trois éléments entourant la bielle (3).

9. Dispositif selon l'une quelconque des revendications précédentes, caractérisé en ce qu'un pont de diodes (11) est inséré entre la bobine (4) et la diode électroluminiscente (5).

FIG.1

FIG.2

# FIG.3

# FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-1 401 149  (CARL ZEISS JENA)<br>* Page 1, colonne de droite, ligne 32 - page 2, colonne de gauche, ligne 20; fig. * | 1-3 | G 01 P   13/04<br>H 01 H    9/16 |
| Y | DE-A-3 126 023  (VOLKSWAGENWERK)<br>* Page 3, lignes 16-24; fig. * | 1-3 | |
| A | DE-B-1 229 624  (SIEMENS)<br>* Revendication 1; figure 1 * | 1 | |
| A | EP-A-0 152 067  (K.K. S.G.)<br>* Abrégé; figures 1-48 * | 1-3,5-7 | |
| A | US-A-3 826 985  (WILEY)<br>* Abrégé; figures 1-3 * | 4,5,8,9 | |

| DOMAINES TECHNIQUES RECHERCHES (Int. Cl.5) |
|---|
| G 01 P<br>H 01 H<br>G 01 D |

Le présent rapport a été établi pour toutes les revendications

| Lieu de la recherche | Date d'achèvement de la recherche | Examinateur |
|---|---|---|
| LA HAYE | 05-06-1992 | JONSSON P.O. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)